## Europäisches Patentamt

## European Patent Office

## Office européen des brevets

(11) Publication number: **0 188 320**
**B1**

# EUROPEAN PATENT SPECIFICATION

(45) Date of publication of patent specification: **16.05.90**

(51) Int. Cl.⁵: **C 25 B 9/00**

(21) Application number: **86300068.3**

(22) Date of filing: **07.01.86**

(54) Electrolytic cell for sea water.

(30) Priority: **14.01.85 JP 2390/85**

(43) Date of publication of application:
**23.07.86 Bulletin 86/30**

(45) Publication of the grant of the patent:
**16.05.90 Bulletin 90/20**

(84) Designated Contracting States:
**DE FR GB IT**

(56) References cited:
**DE-A-2 919 527**
**US-A-3 119 760**

**PATENTS ABSTRACTS OF JAPAN, vol. 1, no. 120, 12th October 1977, page 2739 C 77; & JP - A - 52 78 675 (HITACHI DENSEN K.K.) 07-02-1977**

(73) Proprietor: **CHLORINE ENGINEERS CORP., LTD.**
**Shosen Mitsui Building No. 1-1, Toranomon 2-chome Minato-ku**
**Tokyo (JP)**

(72) Inventor: **Yamamoto, Shinichiro**
**58-135, Nishi-Koyodai 1-chome, Nadasaki--cho**
**Kojimagun, Okayama (JP)**
Inventor: **Sudo, Shigeki**
**25-23, Tai 4-chome**
**Tamano-shi, Okayama (JP)**
Inventor: **Ohmizu, Tsuyoshi**
**289, Uematsu, Nadasaki-cho**
**Kojimagun, Okayama (JP)**

(74) Representative: **Whalley, Kevin et al**
**MARKS & CLERK 57/60 Lincoln's Inn Fields**
**London WC2A 3LS (GB)**

## Description

The present invention relates to an electrolytic cell for sea water, and in particular to a filter-press type electrolytic cell for obtaining sodium hypochlorite from sea water without substantial formation upon cathode surfaces of such deposits as calcium and magnesium components in the sea water.

In an electrolytic cell for sea water, calcium carbonate and magnesium hydroxide which deposit on cathode surfaces lead to an increase in the operating cell voltage and a decrease in the current efficiency, and build up thicknesses that impede or prevent electrolyte flow. Electrolysis is then intermittently interrupted, unless some procedure such as back-washing or acid-washing is taken to remove these deposits.

In many conventional electrolytic cells for sea water, with vertically disposed electrodes, the sea water enters the cell below the electrodes. Since the sea water is in contact with the bottom edge of the electrodes, deposits of magnesium and calcium components in the sea water are unavoidable.

In order to overcome this problem, the prevention of such deposits, by means of roundbottomed electrodes or wedge-bottomed electrodes, is proposed in Japan Utility Model Application Publication No. JP(U)79-143361 (Jikkaisho 54-143361). Deposits of the components of sea water are considerably reduced by this method, but deposits are not completely prevented if the content of hardness components in sea water is high or if the operation runs for a long time.

On the other hand, an electrolytic cell with vertically mounted cell units is known from Japan Patent Application Publication No. JP(A) 83-171587 (Tokkaisho 58-171587), see in particular the separator structure of the figure of this publication. However, in this patent application there is no disclosure with regard to the deposits of metallic components of sea water nor the passage of electrolyte in the cell unit.

The inventors of the present invention noted that deposits of metallic components on the cathode surfaces in conventional electrolytic cells are caused by contact with the bottom edges of cathodes.

Attention is also drawn to the disclosures of US—A—3119760 and of Patent Abstracts of Japan, Vol. 1, No. 120 (1977), page 2739C77 relating to JP—A—5278675.

The present invention aims to provide an electrolytic cell with little or no deposits of metallic components such as magnesium hydroxide and calcium carbonate on the cathode surface.

The present invention provides a filter-press type electrolytic cell for the electrolysis of sea water to produce hypochlorite, comprising: two endframes: a plurality of vertically arranged electrolytic cell units with a separator adjacent therebetween; the separator having an internal passage connecting an electrolyte outlet of a preceding cell unit and an electrolyte inlet of a following cell unit; each of said cell units having a vertical anode and two vertical cathodes; gaskets placed in between the respective adjacent anodes, cathodes and separators to provide spaces for electrolyte flow between the electrodes; an electrolyte inlet to the first cell unit, at the lower part of the electrolytic cell; and an electrolyte outlet from the last cell unit, at the upper part of the electrolytic cell; one of the cathodes of each pair having an aperture at a position aligned with the said inlet and the other cathode of each pair having an aperture at a position aligned with the said outlet, and the anodes having apertures at positions aligned with the said inlet and outlet, said apertures providing a path for the flow of electrolyte through the cell.

The invention will be further described, by way of example only, with reference to the accompanying drawings, in which:

Figure 1 is a vertical sectional view of an embodiment of a filter-press type electrolytic cell for sea water in accordance with the present invention: and

Figure 2 is an exploded perspective view of the electrolytic cell shown in Figure 1.

The drawings show an electrolytic cell 1 which comprises four vertical electrolytic cell units 4, having a pair of endframes 2, 2a at the ends with spacers 3 placed between the electrolytic cell units. Each electrolytic cell unit 4 comprises a laminar anode 5 interposed between a pair of laminar cathodes 6, 6a separated by three gaskets 7. The endmost cathodes 6, 6a are, respectively, in contact with endframes 2, 2a. At the lower exterior of the endframe 2 is an electrolyte feed port or inlet 8, and at the upper exterior of the endframe 2a is an electrolyte discharge port or outlet 9. An electrolyte feed passage or inlet 10 penetrates the outermost adjacent cathode at the position corresponding to the electrolyte feed port 8. Likewise, an electrolyte discharge passage or outlet 11 connects the electrolyte discharge port 9 and the outermost adjacent cathode.

In the lower and upper parts of the anode 5 two horizontally extended apertures 12 having an oval vertical section are disposed at the positions corresponding to the above mentioned electrolyte feed and discharge passages 10, 11. These electrodes have no other aperture except those at the inlet and outlet. The spacer 3 separating the electrolytic cell units 4 has an upper stream hole 13 and a lower stream hole 14 respectively corresponding to the electrolyte discharge passage 11 of the cathode 6a and the electrolyte feed passage 10 of the cathode 6. Both stream holes 13 and 14 are connected by a vertical passage 15. Each cathode 6, 6a has one or two projecting parts 16 on one side, which projecting part 16 is connected by a busbar 17 to a projecting part 18 of the anode 5 of the adjacent electrolytic cell unit 4.

This apparatus is used as follows in sea water electrolysis.

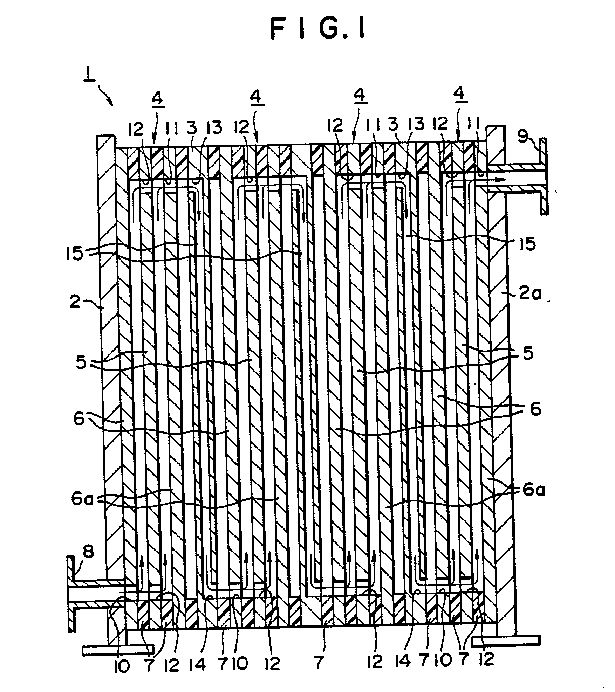

Sea water, as electrolyte, enters the electrolytic cell 1 through the electrolyte inlet 8; while electric current is supplied to the anode 5, the electrolyte is electrolyzed in the course of flowing along the interelectrode gaps between the anode 5 and the cathodes 6, 6a which interpose the anode, and the partially electrolyzed electrolyte flows through the electrolyte outlet 11 of the cathode 6a and along the connecting passage 15 of the spacer 3 and into the adjacent electrolytic cell unit 4 through the electrolyte inlet 10; to repeat the process, electrolyzing continuously. The electrolyte is finally discharged from the last electrolytic cell unit 4 of the electrolytic cell through the electrolyte outlet 9. In such case, the electric current flows from the anode 5 of the electrolytic cell unit 4 positioned at the left hand side of Figure 1 to its cathodes 6, 6a on either side. The current also flows to the anode of the adjacent electrolytic cell unit through the busbar 17; and thus passes in succession through the electrolytic cell 1 causing the electrolysis of sodium chloride to sodium hypochlorite in the electrolyte.

In this example, sea water is introduced to the electrolytic cell 1 from the feed port 8 on the side of the cell. As the bottom edge of the cathode is held between gaskets 7, sea water does not contact the bottom edges of the cathodes 6, 6a in contrast to conventional electrolytic cells. Therefore, deposits of magnesium and calcium components in sea water are not formed. Furthermore, an electrolyte flows from the lower part to the upper part of the electrolytic cell unit 4, the electrolyte is fully electrolyzed in said unit, and the electrolytic efficiency does not decrease.

The invention will be further described with reference to the following illustrative Examples.

### Example 1

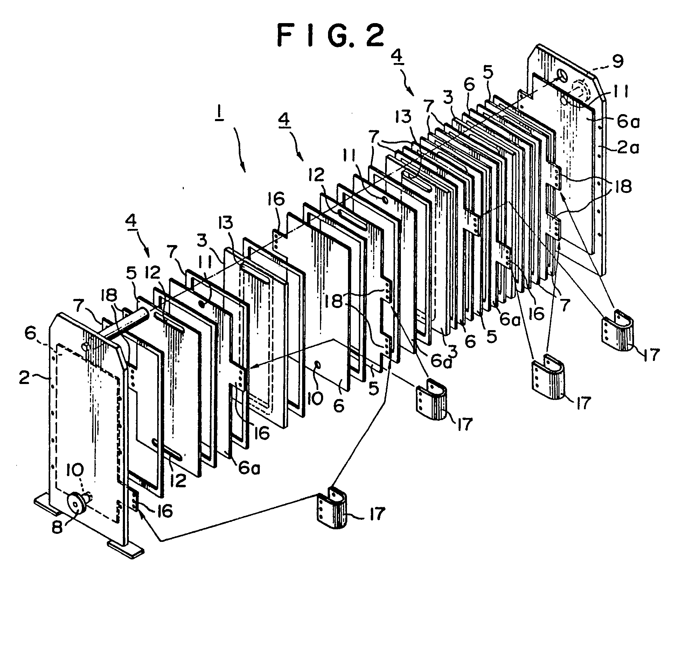

An electrolytic cell unit comprised a dimensionally stable anode 50 cm long, 25 cm wide and 3 mm thick, a pair of stainless steel cathodes of the same shape and two picture frame-like 3 mm gaskets placed between the anode and the cathodes. An electrolytic cell for sea water as shown in Figure 1 and Figure 2 was formed by utilizing four such electrolytic cell units with spacers, with passages from top to bottom between said units.

The electrolysis took place at a sea water flow rate through the cell of 900 liters per hour at 300 amperes of electrolytic current. The concentration of available chlorine in the electrolyte after electrolysis was about 1600 mg per liter at which current efficiency was 85 to 94%.

The electrolytic cell was operated for 9 months periods of time.

After operation for 9 months periods of time, the electrolytic cell was disassembled, and deposits such as magnesium hydroxide and calcium hydroxide were not substantially observed on the reactive surfaces.

### Example 2

An electrolytic cell was assembled with the same elements as in Example 1, but the anodes and cathodes were 100 cm long, 50 cm wide and 3 mm thick and picture frame-like gaskets were 2 mm thick, and the electrolytic cell comprised two electrolytic cell units.

The electrolysis proceeded at a flow rate of sea water through the cell of 3200 liters per hour, while electric current was fed at 1300 amperes. The concentration of available chlorine in the electrolyte after electrolysis was about 1000 mg per liter and the current efficiency was 85 to 95%.

After operation for periods of 8 months, the interior of the electrolytic cell was observed, and deposits were not substantially observed on the reaction surfaces.

### Claims

1. A filter-press type electrolytic cell for the electrolysis of sea water to produce hypochlorite, comprising: two endframes (2, 2a); a plurality of vertically arranged electrolytic cell units (4) with a separator (3) adjacent therebetween; the separator having an internal passage (15) connecting an electrolyte outlet of a preceding cell unit and an electrolyte inlet of a following cell unit; each of said cell units having a vertical anode (5) and two vertical cathodes (6, 6a); gaskets placed in between the respective adjacent anodes, cathodes and separators to provide spaces for electrolyte flow between the electrodes; an electrolyte inlet (8) to the first cell unit, at the lower part of the electrolytic cell; and an electrolyte outlet (9) from the last cell unit, at the upper part of the electrolytic cell; one of the cathodes of each pair having a aperture (10) at a position aligned with the said inlet (8) and the other cathode of each pair having an aperture (11) at a position aligned with the said outlet (9), and the anodes having apertures (12) at positions aligned with the said inlet and outlet, said apertures (10, 11, 12) providing a path for the flow of electrolyte through the cell.

2. A filter-press type electrolytic cell as claimed in claim 1, characterised in that the said cell units are connected electrically in series.

3. A filter-press type electrolytic cell as claimed in claim 1 or 2, characterised in that the said electrodes have no apertures except the apertures at the positions corresponding to the said inlet and outlet.

4. A filter-press type electrolytic cell as claimed in any of claims 1 to 3, characterised in that the said electrodes have horizontally extended said apertures (10, 11, 12) with an oval vertical section.

### Patentansprüche

1. Elektrolysezelle vom Typ Filterpresse zum Elektrolysieren von Seewasser zur Erzeugung von Hypochlorit, welche umfaßt: zwei Stirnrahmen (2, 2a); mehrere vertikal angeordnete Elektrolysezellen-Einheiten (4) mit einem Trennglied (3), das zwischen diesen und angrenzend angeordnet ist und einen inneren Durchgang (15) aufweist, welcher einen Elektrolyten-Ausgang einer vorangehenden Zellenheit und den Elektrolyten-Ein-

gang einer folgenden Zelleneinheit verbindet; wobei jede der genannten Zelleneinheiten eine vertikale Anode (5) und zwei vertikale Kathoden (6, 6a) aufweist und jeweils Dichtungen zwischen benachbarten Anoden, Kathoden bzw. Trenngliedern angeordnet sind, um Raum für die Elektrolytenströmung zwischen den Elektroden vorzusehen; wobei ferner ein Elektrolyten-Einlaß (8) zu der ersten Zelleneinheit im Bereich des unteren Teils der Elektrolysezelle und ein Elektrolytenauslaß (9) von der letzten Zelleneinheit im Bereich des oberen Teils der Elektrolysezelle vorgesehen sind; eine der Kathoden jedes Paares eine Öffnung (10) an einer Stelle in Fluchtung mit dem genannten Einlaß (8) und die anderen Kathoden jedes Paares eine Öffnung an einer Stelle in Fluchtung mit dem genannten Auslaß aufweist, und die Anodenöffnungen (12) an Stellen aufweisen, die mit dem genannten Einlaß und mit dem genannten Auslaß in Fluchtung stehen und die genannten Öffnungen (10, 11, 12) einen Strömungsweg für den Elektrolyten durch die zelle darbieten.

2. Elektrolysezelle vom Typ Filterpresse nach Anspruch 1, dadurch gekennzeichnet, daß die genannten Zelleneinheiten elektrisch in Reihe verbunden sind.

3. Elektrolysezellen vom Typ Filterpresse nach Anspruch 1 oder 2, dadurch gekennzeichnet, daß die genannten Elektroden keine Öffnungen aufweisen außer den Öffnungen an den Stellen, die mit dem genannten Einlaß und dem Auslaß korrespondieren.

4. Elektrolysezelle vom Typ Filterpresse nach irgendeinem der Ansprüche 1 bis 3, dadurch gekennzeichnet, daß die genannten Elektroden die genannten Öffnungen (10, 11, 12) mit einem ovalen vertikalen Abschnitt horizontal ausgedehnt aufweisen.

**Revendications**

1. Cellule électrolytique du type à filtre-presse en vue de l'électrolyse d'eau de mer pour fabriquer de l'hypochlorite, comportant: deux cadres terminaux (2, 2a); une pluralité de cellules électrolytiques élémentaires (4) disposées verticalement avec un séparateur (3) adjacent entre elles; le séparateur possédant un passage interne (15) reliant un orifice de sortie d'électrolyte d'une cellule élémentaire précédente à un orifice d'admission d'électrolyte d'une cellule élémentaire suivante; chacune desdites cellules élémentaires possédant une anode verticale (5) et deux cathodes verticales (6, 6a); des joints placés entre les anodes, les cathodes et les séparateurs adjacents respectifs pour créer des espaces en vue d'un écoulement de l'électrolyte entre les électrodes; un orifice d'admission d'électrolyte (8) à la première cellule élémentaire, à la partie inférieure de la cellule électrolytique; et un orifice de sortie d'électrolyte (9) de la dernière cellule élémentaire, à la partie supérieure de la cellule électrolytique; une des cathodes de chaque paire possédant une ouverture (10) en une position alignée sur ledit orifice d'admission (8) et l'autre cathode de chaque paire possédant une ouverture (11) en une position alignée sur ledit orifice de sortie (9), les anodes possédant des ouvertures (10) en des positions alignées sur lesdits orifices d'admission et de sortie, lesdites ouvertures (10, 11, 12) créant un trajet en vue de la circulation de l'électrolyte à travers la cellule.

2. Cellule électrolytique du type à filtre-presse selon la revendication 1, caractérisée en ce que lesdites cellules élémentaires sont connectées électriquement en série.

3. Cellule électrolytique du type à filtre-presse selon la revendication 1 ou 2, caractérisée en ce que lesdites électrodes ne possèdent pas d'ouvertures sauf les ouvertures aux endroits correspondants auxdits orifices d'admission et de sortie.

4. Cellule électrolytique du type à filtre-presse selon l'une quelconque des revendications 1 à 3, caractérisée en ce que lesdites électrodes possèdent lesdites ouvertures s'étendant horizontalement (10, 11, 12) avec une section verticale ovale.

EP  0 188 320  B1

# F I G. I

# F I G. 2